# EUROPÄISCHE PATENTANMELDUNG

(11) **EP 2 941 980 A1**
(43) Veröffentlichungstag der Anmeldung: **11.11.2015**
(21) Anmeldenummer: 14001564.5
(22) Anmeldetag: 05.05.2014
(51) Int. Cl.: A44C 17/04

(54) **Verbundkörper aus Faserverbundwerkstoff und dekorativem Element**

(71) Anmelder: D. Swarovski KG, 6112 Wattens (AT)
(72) Erfinder: Herrmann, Walter, 6123 Terfens (AT); Kunstl, Robin, 6122 Fritzens (AT); Santer, Markus, 6020 Innsbruck (AT)
(74) Vertreter: Maschler, Christoph

(57) **Zusammenfassung**

Dekorativer Verbundkörper (4) enthaltend einen Trägerkörper (1) aus Kunststoff und wenigstens ein im Trägerkörper (1) befestigtes dekoratives Element (2), wobei der Trägerkörper (1) zumindest bereichsweise aus einem faserverstärktem Kunststoff besteht, dadurch gekennzeichnet, dass das dekorative Element (2) stoffschlüssig mit dem Trägerkörper verbunden ist.

## Beschreibung

Die Erfindung betrifft einen dekorativen Verbundkörper enthaltend einen Trägerkörper aus Kunststoff und wenigstens ein im Trägerkörper befestigtes dekoratives Element, wobei der Trägerkörper zumindest bereichsweise, vorzugsweise zur Gänze, aus einem faserverstärktem Kunststoff besteht.

Dekorative Verbundkörper umfassend einen Trägerkörper mit wenigstens einem darin befestigten dekorativen Element können aus den verschiedensten Werkstoffen hergestellt sein. Insbesondere haben sich Kunststoffe als günstige Trägermaterialien herausgestellt, da diese neben günstigen Werkstoffeigenschaften auch einfach zu verformen und daher vielseitig anwendbar sind. Im Vergleich zu metallischen Trägerkörpern haben Kunststoffe jedoch Nachteile hinsichtlich der Festigkeit des Trägerkörpers.

Um eine Optimierung der Werkstoffeigenschaften eines dekorativen Verbundkörpers zu erreichen, lehrt die DE 199 06 844 die Verwendung eines Trägers aus Kunststoff, bestehend aus einem faserverstärkten Kunstharz und einer mehrlagigen Oberflächenbeschichtung. Zur Anordnung von Schmucksteinen im Träger werden Durchgangslöcher gebohrt, in welchen Fassungen oder Metalleinsätze befestigt sind. Um die Fassung in einem Durchtrittsloch zu verankern, wird der Zwischenraum zwischen der Fassung und dem Trägerkörper mit einem Kunstharz ausgegossen. Zur Befestigung der Metalleinsätze wiederum sind passende Ausfräsungen im Träger vorgesehen.

Ein derartiger Verbundkörper hat mehrere Nachteile. Zum einen ist aufgrund der Notwendigkeit der Fassungen bzw. der Metalleinsätze ein besonders hoher Herstellungsaufwand für den Verbundkörper notwendig. Darüber hinaus ist es für manche Anwendungen eines mit Schmucksteinen versehenen dekorativen Verbundkörpers ungünstig, wenn Durchgangslöcher im Trägerkörper vorhanden sind, zumal die in der DE 199 06 844 beschriebenen Fassungen und Metalleinsätze keine Dichtheit gegen durchtretendes Wasser oder Schmutz bieten können. Darüber hinaus besteht das Risiko, dass sich die Schmucksteine aus den Metalleinsätzen bzw. den Fassungen lösen, wodurch der Verbundkörper erheblich an Wert einbüßt.

Ein Schmuckstück bestehend aus einem Faserverbundwerkstoff ist in der DE 299 08 787 U1 gezeigt. Durch die Verwendung von Faserverbundwerkstoffen im Oberflächenbereich der Sichtseite des Schmuckstückes ist die Struktur der Verbundfasern, insbesondere die Geflechtstruktur, Gewebestruktur, Gestick- oder Gestrickstruktur, erkennbar, wodurch sich eine Vielfalt von Oberflächenmustern darstellen lässt. Der Faserverbundwerkstoff reicht bis an die Außenseite des Schmuckstücks. Alternativ kann eine Lackbeschichtung vorgesehen sein. In einer Ausführungsform sind in der Sichtseite des Schmucksteins Ausnehmungen vorgesehen, in welche Edelmetall oder Edelsteineinsätze eingepasst sind. Dabei wird die Ausnehmung während der Herstellung des Faserverbundkörpers oder durch Bohrungen im fertigen Faserverbundkörper erzeugt. Danach werden die Edelmetall- oder Edelsteineinsätze eingepasst, sodass sich eine auf Reibung basierende kraftschlüssige Verbindung zwischen dem Einsatz und dem Faserverbundkörper ergibt. Eine solche kraftschlüssige Verbindung bietet nur unzureichenden Halt für den Edelmetall- oder Edelsteineinsatz im Faserverbundkörper.

Aufgabe der vorliegenden Erfindung ist es daher einen dekorativen Verbundkörper der eingangs beschriebenen Art zur Verfügung zu stellen, der einen Trägerkörper mit besonders günstigen Werkstoffeigenschaften aufweist, wobei das wenigstens eine dekorative Element im Trägerkörper einen besonders stabilen Halt finden soll.

Dies wird durch einen Verbundkörper mit den Merkmalen des Anspruchs 1 gelöst.

Das dekorative Element Ist ausgewählt unter einem, vorzugsweise mit Facetten versehenen, Schmuckstein, welcher ein natürlicher oder synthetischer Edelstein oder ein Schmuckstein aus keramischem Material oder ein Glasstein, vorzugsweise aus Kristallglas, sein kann, einem metallischen Dekorationsobjekt, wie z.B. einem gestanztem Blech, einem Holzelement, wie z.B. einer Echtholz-Fumierplatte, einer Dekorfolie oder einem technischen Funktionselement wie z.B. LEDs, Sensoren, Magnetstreifen, Computerchips, usw. Der Trägerkörper besteht zumindest bereichsweise, in einer Ausführungsform auch zur Gänze, aus einem faserverstärkten Kunststoff und dient zur Anordnung eines dekorativen Elements. Durch den Bereich aus faserverstärktem Kunststoff ergeben sich jene günstigen Werkstoffeigenschaften, die von Faserverbundstoffen geboten werden.

Weitere vorteilhafte Ausführungen der Erfindung sind in den abhängigen Ansprüchen definiert.

Als Kunststoffmaterialien für den Trägerkörper sind sowohl Duroplaste, wie z.B. Pulverlacke, als auch Thermoplaste bevorzugt geeignet. Dabei eignen sich prinzipiell Thermoplaste wie z.B. Polyamide (PA), Polycarbonate (PC), Polymethylmetacrylate (PMMA) und dergleichen.

Thermoplaste sind Kunststoffe, die sich in einem bestimmten Temperaturbereich reversibel verformen lassen. Durch Abkühlung und Wiedererwärmung bis in den schmelzflüssigen Zustand kann die Verformung beliebig oft wiederholt werden. Befindet sich der Thermoplast infolge einer Erwärmung in einem pastösen bis hin zu einem schmelzflüssigen Zustand, kann das dekorative Element besonders einfach im Trägerkörper angeordnet werden.

Bei einem Trägerkörper aus einem duroplastischen Ausgangsmaterial erfolgt bei einer Erwärmung eine Aufschmelzung bzw. Verflüssigung in einen schmelzflüssigen Zustand. Dabei bewirkt die Erwärmung eine Aushärtung des duroplastischen Ausgangsmaterial infolge einer chemischen Vernetzung durch Zufuhr thermischer Energie. Der Trägerkörper erstarrt unter Ausbildung einer stoffschlüssigen Verbindung mit dem dekorativen Element. Die Erstarrung entspricht dabei einer Aushärtung. Aushärtung bedeutet, dass zwischen den Edukten des duroplastischen Materials, vorzugsweise des Pulverlacks, neue Bindungen geschaffen werden und ein irreversibler Übergang vom flüssigen in den festen Zustand erfolgt.

Dem gegenüber erfolgt die Ausbildung der stoffschlüssigen Verbindung des dekorativen Elementes mit dem Trägerkörper bei einem thermoplastischen Material durch die Erstarrung des thermoplastischen Kunststoffes während des Abkühlens nach dem Ende der Wärmezufuhr. Im Gegensatz zu duroplastischen Systemen entstehen bei thermoplastischen Kunststoffen keine weiteren Bindungen, sondern die Festigkeit entsteht durch Abkühlen auf eine Temperatur unter der Erstarrungstemperatur. Mithin ist das dekorative Element mit aufgeschmolzenem und wieder erstarrtem Kunststoff des Trägerkörpers aus thermoplastischem Material stoffschlüssig verbunden.

Unter einer stoffschlüssigen Verbindung versteht man allgemein eine Verbindung, bei der die Verbindungspartner durch atomare oder molekulare Kräfte zusammengehalten werden. Insbesondere sind Klebeverbindungen stoffschlüssige Verbindungen.

Überraschend wurde gefunden, dass durch die Faserverstärkung eine besonders stabile und innige Fixierung des dekorativen Elements im Trägerkörper hergestellt werden kann, wenn das dekorative Element im Bereich des faserverstärkten Kunststoffs mit dem Trägerkörper verbunden ist,

Eine ganz stabile und innige Verbindung ergibt sich dabei wenn für den faserverstärkten Kunststoff Pulverlack verwendet wird. Die Pulverlacke sind vorzugsweise ausgewählt aus den Epoxid-Pulverlacken (z.B, Freopox® PE7105), den Polyester-Pulverlacken (z.B. Freiotherm® PP1001), den Acrylat-Pulverlacken (z.B. Freocryl® PY1005), den Poylurethan-Pulverlacken (Freiotherm PU2005) sowie Hybrid-Pulverlacken und deren Abmischungen. Enthält die Kunststoffmatrix des faserverstärkten Kunststoffs Pulverlacke, vorzugsweise ausgewählt aus den angeführten Arten von Pulverlacken, kann durch die Aufschmelzung bzw. Verflüssigung und Aushärtung des Kunststoffs die stoffschlüssige Verbindung mit dem dekorativen Element abgebildet werden, ohne die Notwendigkeit, auf die Oberfläche des dekorativen Elements gesondert Klebstoff aufbringen zu müssen.

Pulverlacke haben weiters den Vorteil lösungsmittelfrei und daher umweltverträglich zu sein. Zudem können Pulverlacke im pulverförmigen Rohzustand leicht verpresst und daher verarbeitet werden.

Auch bei Trägerkörpern aus Thermoplasten kann durch die Aufschmelzung bzw. Verflüssigung und Erstarrung des Kunststoffs die stoffschlüssige Verbindung mit dem dekorativen Element hergestellt werden, ohne die Notwendigkeit auf die Oberfläche des dekorativen Elements gesondert Klebstoff aufbringen zu müssen. Sowohl Duroplaste, wie z.B. Pulverlacke, als auch Thermoplaste weisen die notwendigen adhäsiven Eigenschaften auf.

Da das dekorative Element über seine gesamte Oberfläche, die im Trägerkörper angeordnet ist, mit diesem verbunden ist, wobei das Kunststoffmaterial des Trägerkörpers für die stoffschlüssige Verbindung sorgt, wird grundsätzlich eine äußerst stabile und innige Verbindung zwischen dem dekorativen Element und dem Trägerkörper realisiert.

In einer Ausführungsform der Erfindung ist der gesamte Trägerkörper plattenförmig ausgebildet, wodurch die Herstellung des Verbundkörpers erleichtert wird. Ein plattenförmiger Trägerkörper bietet sich insbesondere dann an, wenn eine Mehrzahl von dekorativen Elementen im Verbundkörper angeordnet werden sollen. Zudem können zumindest teilweise plattenförmige Trägerkörper günstig für Produkte mit ebener Oberfläche wie zum Beispiel für Mobiltelefone, für Hüllen für Mobiltelefone, Kreditkarten oder Mitgliedskarten, verwendet werden.

Als faserverstärkte Kunststoffe können auch zahlreiche Prepregs eingesetzt werden. Dabei handelt es sich um einen einfach handhabbaren, sofort einsatzbereiten faserverstärkten Kunststoff, bei dem die Fasern (vor)imprägniert sind. Erfindungsgemäß besonders vorteilhaft ist der Einsatz lösungsmittelfreier Prepregs. Im Vergleich zu herkömmlichen duroplastischen Prepregs handelt es sich dabei um Prepregs, die selbst bei Raumtemperatur lagerfähig sind und einfach verarbeitet werden können.

Insbesondere sind auch Prepregs mit Pulverlack besonders lange bei Raumtemperatur lagerfähig, wobei bei Pulverlack-Prepregs auf ein Lösungsmittel verzichtet werden kann, sodass der Werkstoff physiologisch unbedenklich ist, trocken und mechanisch einfach bearbeitet werden kann und als Rollenware zur Verfügung steht. Je nach verwendetem Pulverlack sind die Adhäsionseigenschaften sehr gut, sodass ein im Bereich des faserverstärkten Kunststoffs befestigtes dekoratives Element besonders stabil mit dem Trägerkörper verbunden ist. Die Prepregs können dabei bis hin zu einem minimal reaktiven Zustand, z.B. bei einem rund 90%igen Aushärtegrad verwendet werden.

Das dekorative Element insbesondere in Form eines Schmuck- oder Glassteins kann direkt stoffschlüssig mit dem Trägerkörper verbunden sein, wobei die stoffschlüssige Verbindung mit aufgeschmolzenem bzw. verflüssigtem und wieder erstarrtem Kunststoff ausgebildet sein kann. Der Schmuck- oder Glasstein kann dabei beispielsweise similisiert oder mit einer Spiegelschicht versehen sein.

Bei einer direkten stoffschlüssigen Verbindung mit dem Trägerkörper aus Kunststoff und insbesondere mit aufgeschmolzenem und wieder erstarrtem Kunststoff werden die Nachteile des eingangs erwähnten Standes der Technik behoben und eine fertigungstechnisch einfache Möglichkeit geboten, dekorative Elemente, insbesondere Schmuck- oder Glassteine, mit einem Trägerkörper aus Kunststoff zu verbinden, wobei infolge der direkten stoffschlüssigen Verbindung eine besonders stabile und innige Befestigung des dekorativen Elementes im Trägerkörper ermöglicht wird.

Die Fasern des faserverstärkten Kunststoffes können unter anderem Kohlenstofffasern (Carbonfasem), Glasfasern, Naturfasern und/oder Aramidfasern sein. Weiters sind Basaltfasern oder Naturfasern wie z.B. Hanf, Flachs, Jute, Sisal, Kokos, Stroh, Heu und/oder Moosfasern denkbar. Auch Hyhridgewebe, das heißt eine Mischung mehrerer Faserarten, kann für die Erfindung verwendet werden. Insbesondere bei Carbonfasern, die bevorzugt verwendet werden, haben die Bereiche aus faserverstärktem Kunststoff eine hochwertige, dem technischen Zeitgeist entsprechende Optik und bieten einen 3D-Effekt, der bei Bewegen des Verbundkörpers hologrammartig wirkt. Zu diesem Zweck können verschiedene Webstrukturen und Webarten für die Fasern des faserverstärkten Bereiches vorgesehen sein. Möglich sind beispielsweise Leinwand-, Köper- und Atlasbindung. Diese Webarten können sowohl biaxial als auch unidirektional aufgebaut sein. Typische Flächengewichte für den faserverstärkten Kunststoffbereich liegen zwischen 30 und 500 g/m².

In einer Ausführungsform der Erfindung ist auf jener Seite des Trägerkörpers, an der das wenigstens eine dekorative Element angeordnet ist, an der Außenseite des Trägerkörpers eine für Licht des sichtbaren Spektrums zumindest teilweise transparente Folie angeordnet. Bevorzugt sind Folien auf Basis von Polymethylmethacrylat (PMMA). Die Folie kann während des Herstellungsverfahrens zudem als Transferfolie dienen, mittels der das wenigstens eine dekorative Element oder auch eine Mehrzahl von dekorativen Elementen vor bzw. während der Befestigung mit dem Trägerkörper gehalten wird. Zusätzlich oder alternativ kann an der Außenseite des Trägerkörpers oder der Folie eine transparente Deckplatte angeordnet werden. Diese Deckplatte kann zum Schutz des dekorativen Elements im Trägerkörper dienen.

Sowohl die Folie als auch die Deckplatte besteht vorzugsweise aus Kunststoff, die vorzugsweise ausgewählt sind aus Polymethylmethacrylat (PMMA), (z.B. Plexiglas®), Zelluloseacetat (z.B. Tenite® 105E1R26029), Isomer EMAA (z.B. Surlync® PC2000), thermoplastisches Elastomer auf Silikonbasis (z.B. Geniomer® 200), thermoplastisches Polyurethan (z.B. Elastollan® 695A), cyclo-olefinisches Copolymer (z.B. Topas® 5013), amorphes Polyamid (z.B. Grilamid® TR90), Polycarbonat (z.B. Makrolon® 6555). Die obigen transparenten Kunststoffe weisen eine hohe optische Güte auf. Insbesondere wenn Schmucksteine als dekorative Elemente verwendet werden bleibt deren Brillanzeffekt bestmöglich erhalten, wenn sich die Brechungsindizes zwischen Schmucksteinen und der Folie bzw. Deckplatte möglichst stark unterscheiden. Diesbezüglich günstig sind Schmucksteine aus Kristallglas, da diese einen hohen Brechungsindex zwischen 1,54 und 1,58 aufweisen. Möglich ist aber auch, dass die Deckplatte aus Glas hergestellt ist.

Dabei hat sich überraschend herausgestellt, dass durch eine Folie aus PMMA ein besonders guter Schutz des im Trägerkörper angeordneten dekorativen Elements geboten wird und damit ein erfindungsgemäßer Verbundkörper zur Verfügung gestellt wird, der hinsichtlich Haftung der dekorativen Elemente und insbesondere hinsichtlich des Korrosionsverhaltens über die Maßen gute Ergebnisse liefert, sodass ein solcher Verbundkörper die eingebetteten dekorativen Elemente besser und dauerhafter gegen Umwelteinflüsse schützt, als dies bei dekorativen Elementen der Fall ist, die in gebohrte Löcher oder in Kavitäten eingeklebt werden. Das Korrosionsverhalten ist dabei insofern relevant, als das dekorative Element metallische Komponenten umfassen kann. Bei Glas- oder Schmucksteinen kann dies dann zum Tragen kommen, wenn die im Trägerkörper angeordnete Oberfläche zur Erhöhung der Brillanz mit einer metallischen Spiegelschicht versehen oder similisiert ist.

Um diesen verbesserten Schutz nachzuweisen, sind mehrere Versuche durchgeführt worden, wobei als dekorative Elemente mehrere aus Kristallglas geschliffene Schmucksteine mit der Bezeichnung 1028 Cry F-foil pp14 Chatons in einen mit Harz imprägnierten karbonfaserverstärkten Trägerkörper eingesetzt worden sind und sowohl die Seite des Trägerkörpers, an der die Schmucksteine angeordnet sind, als auch die gegenüberliegende Seite mit einer PMMA-Folie verbunden worden ist, wobei dieser Materialverbund gemäß der Erfindung in einem gemeinsamen Pressvorgang entstanden ist. Die Prüfkörper waren plattenförmig und jeweils 40 mm x 25 mm groß und mit jeweils zehn Schmucksteinen versehen. Beim sogenannten Salzsprühtest (auch "Salzsprühnebelprüfung") gemäß DIN EN ISO 9227:2006-10 wurden die Proben mit Salz besprüht, um die Situation der Meerwasserbelastung oder der Umweltbelastung in einer großen Stadt zu simulieren. Dabei wurden die Proben in den Korrosionsprüfschrank (Fa. WEISS-KWT 450) gehängt und anschließend bei 35 °C einem Salzsprühnebel aus 5 Gew%-iger KochsalzLösung ausgesetzt. Zur Verfolgung der Korrosionsvorgänge wurden die Muster nach 24, 48 bzw. 72 h entnommen, mit Deionat gespült, getrocknet und visuell begutachtet. Dabei hat sich herausgestellt, dass der Trägerkörper keine optische Veränderung erfahren hat, während sich bei einem Trägerkörper ohne PMMA-Folie ein fleckiges Erscheinungsbild ergeben hat. Insbesondere sind beim Prüfkörper mit PMMA-Abdeckung die Schmucksteine völlig intakt geblieben.

Sind im Trägerkörper eine Mehrzahl von dekorativen Elementen befestigt, können diese in einem gemeinsamen Bereich aus faserverstärktem Kunststoff angeordnet sein. Es kann auch vorgesehen sein, dass es mehrere Bereiche aus faserverstärktem Kunststoff gibt, in denen jeweils ein oder mehrere dekorative Elemente angeordnet sind.

Bei einem dekorativen Element in Form eines Schmucksteins kann es sich um einen, vorzugsweise mit Facetten versehenen, geschliffenen, natürlichen oder synthetischen Edelstein oder Glasstein handeln. Glassteine haben dabei den Vorteil einer kostengünstigen Herstellung, die im Falle eines hochwertigen Kristallglases als optisch hochwertiger Ersatz für Edelsteine angesehen werden. Es kann auch vorgesehen sein, dass die Oberfläche des Schmucksteins, die im Trägerkörper angeordnet ist mit einer Verspiegelung bzw. einer Spiegelschicht versehen oder similisiert ist. Diese Verspiegelung kann beispielswiese mittels PVD oder CVD angebracht werden.

Bei Schmucksteinen mit einer Rondiste, die jenen Bereich umrandet, der zwischen Oberteil und Unterteil des Schmucksteins liegt und in dem der Schmuckstein seine größte Umfangsausdehnung aufweist oder bei einer Kante zwischen Oberteil und Unterteil, kann vorgesehen sein, dass der Schmuckstein bis über die Rondiste oder diese Kante hinaus im Trägerkörper angeordnet ist, sodass im Endzustand die Rondiste oder diese Kante klammerartig vom Trägerkörper umgriffen ist, wodurch sich ein besonders fester Halt ergibt. Dabei kann vorgesehen sein, den Schmuckstein oder generell das dekorative Element nur derart weit im Trägerkörper anzuordnen, dass Teile davon reliefartig vom Trägerkörper hervorstehen. Es kann aber auch vorgesehen sein, die äußere Oberfläche des Schmucksteins oder generell des dekorativen Elementes bündig mit der Oberfläche des Trägerkörpers abzuschließen oder sogar den Schmuckstein bzw. das dekorative Element unterhalb der äußeren Oberfläche des Trägerkörpers zu fixieren, sodass an der Stelle des Schmucksteins bzw. dekorativen Elementes Kavitäten verbleiben.

Die Erfindung betrifft weiters ein Verfahren zur Herstellung eines wie oben beschriebenen Verbundkörpers.

In einem ersten Schritt wird der Trägerkörper z.B. in einem Ofen auf eine erste Temperatur erhitzt, Durch das Erhitzen wird der Kunststoff des Trägerkörpers aufgeschmolzen und pastös oder teilweise flüssig und kann zumindest in einem gewissen Ausmaß verformt und umgeschichtet werden. Bei duroplastischen Materialien erfolgt dabei eine Aushärtung. Dabei kann der Trägerkörper auf eine Temperatur zwischen 90 bis 250°C, vorzugsweise zwischen 120 und 220°C und ganz vorzugsweise zwischen 130 und 180°C erhitzt werden.

In einem nächsten Schritt wird das wenigstens eine dekorative Element mit dem Trägerkörper verpresst, wobei in Folge des pastösen oder teilweise flüssigen Zustandes des Kunststoffs das dekorative Element in den Trägerkörper hineingedrückt wird und dabei das Material des Trägerkörpers lokal umgeschichtet bzw. verdichtet wird. Der Druck mit dem das dekorative Element mit dem Trägerkörper verpresst wird kann beispielsweise rund 0,01-1 kN/cm² vorzugsweise 0,02-0,5 kN/cm² und besonders bevorzugt 0,03-0,2 kN/cm² betragen. Vorzugsweise werden für die Verpressung des dekorativen Elements mit dem Trägerkörper metallische Presswerkzeuge mit hoher Oberflächengüte verwendet.

Aufgrund des pastösen oder teilweise flüssigen Zustandes des Trägerkörpers kann sich die Kunststoffmatrix an die Oberfläche des dekorativen Elements legen, sodass sich in einem weiteren Schritt eine stoffschlüssige Verbindung zwischen dem dekorativen Element und dem Trägerkörper ausbildet. Dadurch kann das wenigstens eine dekorative Element mit sehr wenigen Arbeitsschritten mit dem Trägerkörper verbunden werden, wobei es insbesondere nicht notwendig ist, das dekorative Element gesondert mit Klebstoff zu versehen, da der Kunststoff des Trägerkörpers selbst als Klebstoff dient. Bei duroplastischen Materialien kann sich die stoffschlüssige Verbindung bereits durch die Aushärtung während des Erhitzens ausbilden. Bei thermoplastischen Materialien bildet sich die stoffschlüssige Verbindung mit dem Trägerkörper durch Erstarrung infolge des Abkühlens des Verbundkörpers.

Es kann vorteilhaft sein, den Trägerkörper vor dem Erhitzen auf die erste Temperatur vorzuwärmen. Beispielsweise kann dieses Vorwärmen bei einer Vorwärmtemperatur von rund 130° C erfolgen und/oder für eine Zeit von rund einer Stunde andauern.

In einer weiteren Ausführungsform des erfindungsgemäßen Verfahrens wird der Trägerkörper während des Verpressens auf eine Temperatur oberhalb der ersten Temperatur erhitzt. Dieser Erhitzungsvorgang kann beispielsweise bei einer Temperatur von 120 bis 280°C erfolgen.

In einer weiteren Ausführungsform erfolgt der Erwärmungsvorgang auf die erste Temperatur mehrstufig, wobei zunächst ein Erwärmen auf eine zweite Temperatur oberhalb der ersten Temperatur und anschließend ein erneutes Abkühlen auf die erste Temperatur erfolgt. Das Erwärmen auf die zweite Temperatur kann beispielsweise bei einer Temperatur von rund 120 bis 280° C erfolgen.

Beim Abkühlen bildet sich eine stoffschlüssige Verbindung zwischen dem dekorativen Element und dem aufgeschmolzenen und wieder erstarrten bzw. ausgehärteten Kunststoff des Trägerkörpers aus. Dieses Abkühlen kann unter Aufrechterhaltung eines Pressdrucks erfolgen, indem das Abkühlen erfolgt, während der Verbundkörper sich noch innerhalb des Presswerkzeugs befindet.

In einer Ausführungsform werden vor dem Verpressen eine oder mehrere Kavitäten für das oder die dekorativen Elemente im Aufnahmebereich des Trägerkörpers vorgestanzt, wodurch das Eindrücken der dekorativen Elemente in den Trägerkörper erleichtert wird. Während des Verpressens können das oder die dekorativen Elemente an einer Folie gehalten werden, wodurch sich eine besonders einfache Herstellungsart eines Verbundkörpers mit Folie über dem dekorativen Element ergibt. Diese Folie kann in Folge dieses Verpressens ebenfalls mit dem Trägerkörper verbunden werden. Dabei kann die Folie ebenso wie das dekorative Element mit dem Trägerkörper, insbesondere mit dem aufgeschmolzenen und wieder erstarrten bzw. ausgehärteten Kunststoff des Trägerkörpers eine stoffschlüssige Verbindung eingehen. Zusätzlich oder alternativ kann auch die Folie selbst aufschmelzen und wieder erstarren und dadurch mit dem Trägerkörperfix verbunden werden.

Weiters kann vorgesehen sein, das oder die dekorativen Elemente gleichzeitig mit einer Deckplatte mit dem Trägerkörper zu verpressen. Diese Deckplatte kann als Schutzplatte ebenso wie die oben beschriebene Folie direkt auf den Trägerkörper oder direkt auf diese Folie aufgebracht werden.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1: eine schematische Darstellung zur Herstellung eines erfindungsgemäßen Verbundkörpers,
- Fig. 2: eine weitere schematische Darstellung zur Herstellung eines erfindungsgemäßen Verbundkörpers,
- Fig. 3: eine Querschnittsdarstellung eines erfindungsgemäßen Verbundkörpers,
- Fig. 4a: eine weitere schematische Darstellung zur Herstellung einer anderen Ausführungsform eines erfindungsgemäßen Verbundkörpers,
- Fig. 4b: eine Querschnittsdarstellung dieser Ausführungsform des erfindungsgemäßen Verbundkörpers und
- Fig. 5 bis 11: schematische Darstellungen zur Herstellung verschiedener Ausführungsformen eines erfindungsgemäßen Verbundkörpers.

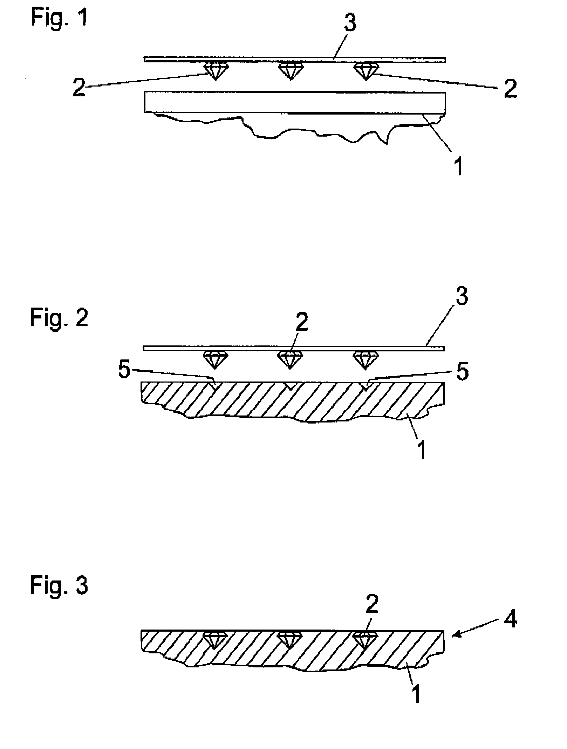

Figur 1 zeigt eine schematische Darstellung zur Herstellung eines erfindungsgemäßen Verbundkörpers 4 mit einem aus faserverstärktem Kunststoff bestehenden Trägerkörper 1, in dem eine Mehrzahl von dekorativen Elementen 2 in Form von Schmucksteinen 2 angeordnet wird. Im vorliegenden Fall ist der gesamte Trägerkörper plattenförmig und aus einem faserverstärkten Kunststoff bestehend. Die Schmucksteine 2 werden mittels einer Folie 3, die in diesem Fall auch als Transferfolie dient, zum Trägerkörper 1 bewegt. Nach Erwärmen des Trägerkörpers werden die Schmucksteine 2 mit dem Trägerkörper 1 verpresst und bilden den erfindungsgemäßen Verbundkörper 4. Aus Gründen der Übersichtlichkeit sind die im Stand der Technik an sich bekannten Heizmittel und Presswerkzeuge für die Erwärmung und das Verpressen in den gezeigten Figuren nicht bzw. nur schematisch dargestellt.

Nach Erstarren des aufgeschmolzenen Kunststoffs des Trägerkörpers 1 sind die Schmucksteine 2 äußerst stabil und innig mit diesem verbunden. In diesem Zustand kann die beispielsweise aus PMMA bestehende Folie 3 wieder entfernt werden. Es kann aber auch vorgesehen sein, dass die Folie 3 zum Schutz oder aus dekorativen Gründen am Verbundkörper 4 verbleibt.

In Figur 2 ist eine weitere Darstellung zur Herstellung eines erfindungsgemäßen Verbundkörpers 4 gezeigt, die sich dahingehend von Figur 1 unterscheidet, dass in den Trägerkörper 1 vorab Kavitäten 5 z.B. durch Stanzen eingeformt worden sind, die zur Erleichterung des Eindrückens der Schmucksteine 2 dienen. Während des Verpressens müssen die Schmucksteine 2 weniger aufgeschmolzenes bzw. zumindest teilweise flüssiges Kunststoffmaterial des Trägerkörpers 1 umschichten, welches nach Wiedererstarren stoffschlüssig mit den Schmucksteinen 2 verbunden ist.

Wie anhand der Figur 3 ersichtlich ist, die einen gemäß Fig. 1 oder Fig. 2 hergestellten Verbundkörper 4 in einer Querschnittsdarstellung zeigt, sind die vorgeformten Kavitäten 5 im fertig hergestellten Verbundkörper 4 nicht mehr erkennbar.

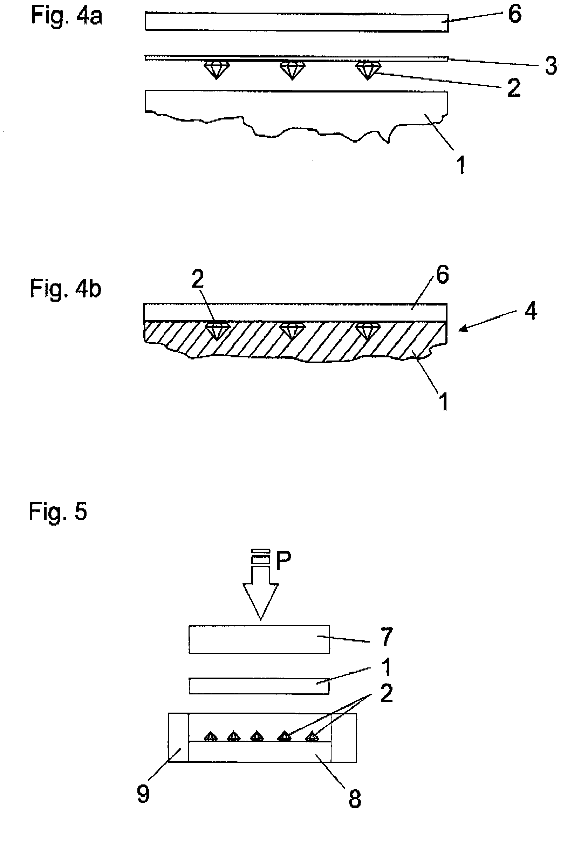

In Figur 4a ist eine schematische Darstellung zur Herstellung einer weiteren Ausführungsform eines erfindungsgemäßen Verbundkörpers 4 gezeigt. In diesem Fall wird der Trägerkörper 1 zusätzlich mit einer Deckplatte 6 aus transparentem Kunststoff verbunden. Im gezeigten Fall werden zunächst die Schmucksteine 2 mittels einer als Transferfolie dienenden Folie 3 mit dem Trägerkörper 1 verpresst. Anschließend wird die Folie 3 abgezogen und die Deckplatte 6 an den Trägerkörper 1 geklebt. Zu diesem Zweck ist vorgesehen, dass die Deckplatte 6 durch aufgeschmolzenen und wieder erstarrten Kunststoff des Trägerkörpers 1 stoffschlüssig mit diesem verbunden ist. Diese Ausführungsform des erfindungsgemäßen Verbundkörpers 4 ist als Querschnittsdarstellung in Figur 4b dargestellt.

Alternativ kann auch vorgesehen sein, dass die Folie 3 im Verbundkörper 4 verbleibt und die Deckplatte 6 gemeinsam mit den Schmucksteinen 2 und der Folie 3 mit dem Trägerkörper 1 verpresst wird.

Die Verbindung der Schmucksteine 2 mit dem Trägerkörper 1 und der Deckplatte 6 und gegebenenfalls mit der Folie 3 kann in einem einzigen Pressschritt erfolgen.

Figur 5 zeigt in einer schematischen Darstellung wie in Form von Schmucksteinen 2 ausgebildete dekorative Elemente 2 in einen Trägerkörper 1 mittels eines Heißpressverfahrens eingebettet werden. Der Trägerkörper 1 besteht dabei aus einer faserverstärkten Verbundplatte oder aus einer oder mehreren Prepreg-Schichten.

Vorbereitung und Verfahrensablauf:

Nach dem Vorbehandeln der Pressmetallform 7,8 an sämtlichen Kontaktflächen mittels Trennspray werden die Schmucksteine 2 in gewünschter Lage und Position auf dem Unterstempel 8 aufgelegt und der auf die Formfläche zugeschnittene Trägerkörper 1 in Form einer Verbundplatte aus Prepregs (ein- oder mehrlagig) in die Form 7, 8 sorgfältig eingelegt und dabei auf den Schmucksteinen 2 platziert. Danach wird die Form 7,8 durch langsames Anbringen des Oberstempels 7 geschlossen. Die geschlossene Form 7, 8 wird in die Heißpresse 9 gegeben und noch drucklos auf 110°C erwärmt. Bei Erreichen dieser Vorwärmtemperatur wird erstmals minimaler spezifischer Pressdruck p von 0,05 kN/cm² angelegt, damit die Schmucksteine 2 in den bereits ein wenig plastisch gewordenen Trägerkörper 1 eindringen können und somit für den weiteren Prozess nun vorfixiert sind.

Danach erfolgt weiteres Aufheizen der Form 7,8 auf die Pulverlack-spezifische Einbrenntemperatur (z.B. 180°C) bei noch immer anliegendem Pressdruck p von 0,05 kN/cm² für die Dauer von 5 - 10 Minuten. In Folge wird die Form 7, 8 auf ca. 150°C abgekühlt und dann einem konstantem Pressdruck p von 0,1 kN/cm² unterzogen. Die Werkzeugtemperatur wird bei dieser Druckeinstellung weiterhin gesenkt bis ca. 70°C erreicht sind. Anschließend kann der Verbundkörper 4 ausgeformt werden.

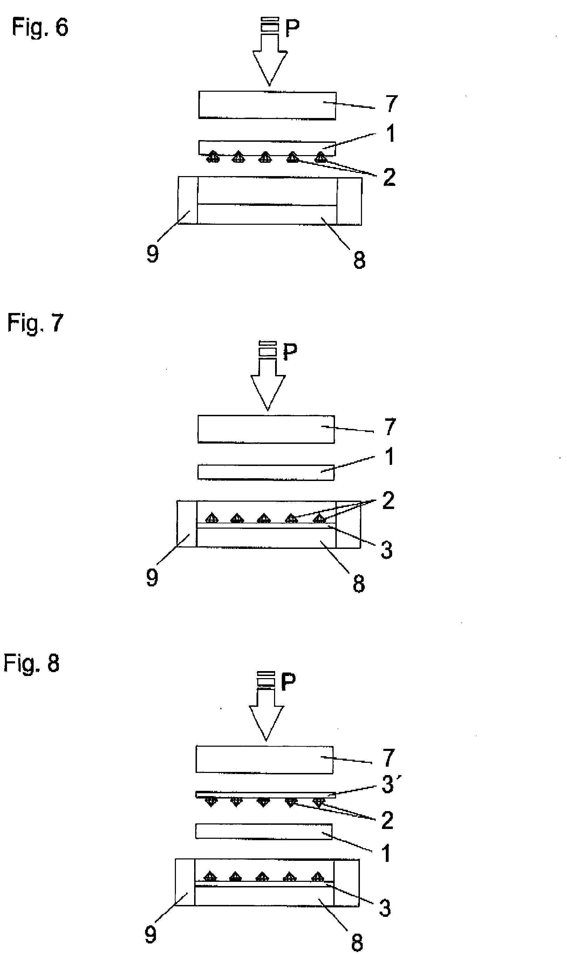

Figur 6 zeigt eine schematische Darstellung wie in Form von Schmucksteinen 2 ausgebildete dekorative Elemente 2 in einen Trägerkörper 1 mittels eines Heißpressverfahrens eingebettet werden. Der Trägerkörper 1 besteht dabei aus einer faserverstärkten Verbundplatte oder aus einer oder mehreren Prepreg-Schichten, wobei der Trägerkörper 1 mit Kavitäten 5 versehen ist.

Vorbereitung und Verfahrensablauf:

Nach dem Vorbehandeln der Pressmetallform an sämtlichen Kontaktflächen mittels Trennspray werden die Schmucksteine 2 in gewünschter Lage und Position in die Platten-/Prepreg-Kavitäten 5 eingelegt und der bestückte Trägerkörper 1 in die Form 7,8 sorgfältig umgesetzt. Danach wird die Form 7,8 durch Anbringen des Oberstempels 7 geschlossen. Die geschlossene Form 7,8 wird in die Heißpresse 9 gegeben und noch drucklos auf 110°C erwärmt. Bei Erreichen dieser Vorwärmtemperatur wird erstmals minimaler spezifischer Pressdruck p von 0,05 kN/cm² angelegt, damit die Schmucksteine 2 in den bereits ein wenig plastisch gewordenen Trägerkörper 1 noch mehr eindringen können und somit für den weiteren Prozess fixiert sind.

Danach erfolgt ein weiteres Aufheizen der Form 7,8 auf die Pulverlackspezifische Einbrenntemperatur (z.B. 180°C) bei noch immer anliegendem Pressdruck p von 0,05 kN/cm² für die Dauer von 5 - 10 Minuten. In Folge wird die Form 7,8 auf ca. 150°C abgekühlt und dann einem konstantem Pressdruck p von 0,1 kN/cm² unterzogen. Die Werkzeugtemperatur wird bei dieser Druckeinstellung weiterhin gesenkt bis ca. 70°C erreicht sind. Anschließend kann der Verbundkörper 4 ausgeformt werden.

Figur 7 zeigt eine schematische Darstellung einer anderen Art der Einbettung von in Form von Schmucksteinen 2 ausgebildeten dekorativen Elementen 2 in einen Trägerkörper 1 mittels eines Heißpressverfahrens. Der Trägerkörper 1 besteht dabei aus einer faserverstärkten Verbundplatte oder aus einer oder mehreren Prepreg-Schichten, wobei die Schmucksteine 2 auf einer Folie 3 fixiert sind.

Vorbereitung und Verfahrensablauf:

Nach dem Vorbehandeln der Pressmetallform 7, 8 an sämtlichen Kontaktflächen mittels Trennspray wird die Folie 3 mit den vorfixierten Schmucksteinen 2 in die Form 7, 8 auf den Unterstempel 8 eingelegt. Das Fixieren der Schmucksteine 2 auf der Folie 3 kann mittels Klebe- oder Lackschicht geschehen. Alternativ kann statt der Folie 3 auch eine Deckplatte 6 verwendet werden. Die Folie 3 oder die Deckplatte 6 die in das Bauteil integriert wird, soll sich zwecks Gesamterscheinungsbild durch hohe Transparenz und optische Güte auszeichnen.

Der auf die Formfläche zugeschnittene Trägerkörper 1 in Form einer Verbundplatte aus Prepregs (ein- oder mehrlagig) wird sorgfältig in die Form 7, 8 auf die Schmucksteine 2 eingelegt und die Form 7, 8 durch Anbringen des Oberstempels 7 geschlossen. Die geschlossene Form 7, 8 wird In die Heißpresse 9 gegeben und noch drucklos auf 110°C erwärmt. Bei Erreichen dieser Vorwärmtemperatur wird erstmals minimaler spezifischer Pressdruck p von 0,05 kN/cm² angelegt, damit die Schmucksteine 2 in den bereits ein wenig plastisch gewordenen Trägerkörper 1 noch mehr eindringen können und somit für den weiteren Prozess fixiert sind.

Danach erfolgt weiteres Aufheizen der Form auf die Pulverlack-spezifische Einbrenntemperatur (z.B. 180°C) bei noch immer anliegendem Pressdruck p von 0,05 kN/cm² für die Dauer von 5 - 10 Minuten. In Folge wird die Form 7, 8 auf ca. 150°C abgekühlt und dann einem konstantem Pressdruck p von 0,1 kN/cm² unterzogen. Die Werkzeugtemperatur wird bei dieser Druckeinstellung weiterhin gesenkt bis ca. 70°C erreicht sind. Anschließend kann der Verbundkörper 4 ausgeformt werden. Nach diesem Fertigungsschritt kann die Folie 3 entweder abgezogen werden oder sie verbleibt auf dem Trägerkörper 1.

Als weiterführende Variante wird der Aufbau der zu verpressenden Schichten aufgrund von möglichen, späteren Verzugsproblemen im Bauteil symmetrisch vorgenommen:

Figur 8 zeigt eine schematische Darstellung eines Verfahrens, bei dem Schmucksteine 2 symmetrisch auf gegenüberliegenden Seiten eines plattenförmigen Trägerkörpers 1 angeordnet werden. In diesem Fall werden Schmucksteine 2 auf zwei Folien 3, 3' fixiert. Während die Folie 3 wie im Beispiel gemäß Figur 7 auf den Unterstempel 8 eingelegt wird, wird die Folie 3' auf dem Oberstempel 7 fixiert. Anschließend wird - wie in den vorigen Beispielen - der Trägerkörper 1 in die Form 7, 8 eingelegt, woraufhin die Form 7, 8 durch Anbringen des Oberstempels 7 geschlossen wird.

In den folgenden Ausführungsformen der Erfindung werden die dekorativen Elemente 2 in Form von Schmucksteinen 2 im Gegensatz zu den vorbeschriebenen Ausführungsformen nicht in den faserverstärkten Bereich 10 des Trägerkörpers 1 angeordnet.

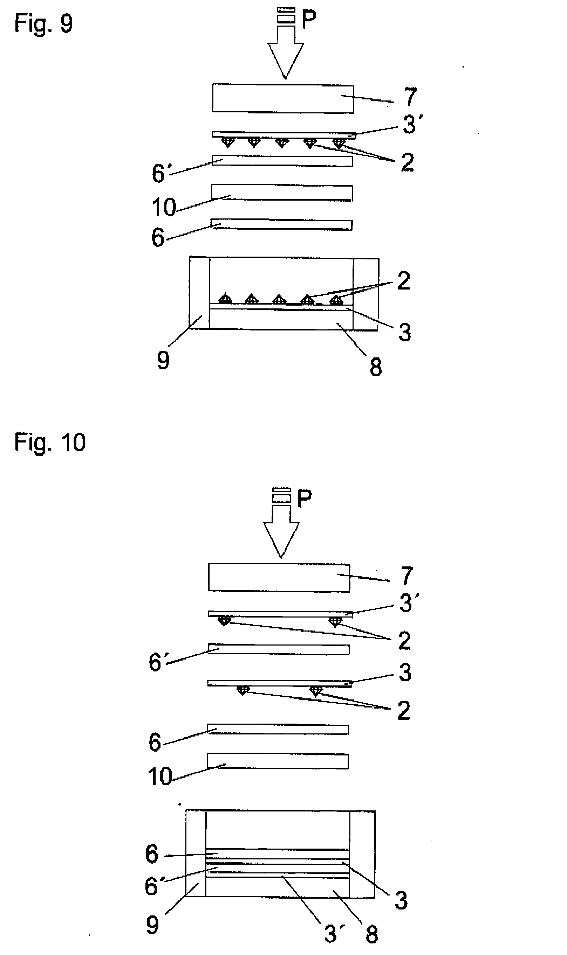

Die schematische Darstellung gemäß Figur 9 zeigt ein Herstellungsverfahren bei dem eine faserverstärkte Verbundplatte 10 oder eine oder mehrere Prepreg-Schichten mit zwei Deckplatten 6, 6' aus PMMA zu einem Trägerkörper 1 verbunden werden. Statt der Deckplatten 6, 6' können auch eine oder mehrere Schichten Kunststofffolien mit dem Bereich 10 aus faserverstärktem Kunststoff zum Trägerkörper 1 zusammengesetzt werden. Die Verbindung der Deckplatten 6, 6' mit dem Bereich 10 kann im gleichen Pressschritt erfolgen, bei dem die Schmucksteine 2 mit dem Trägerkörper 1 verbunden werden. Dabei werden die Deckplatten 6, 6' stoffschlüssig mit aufgeschmolzenem und wieder erstarrtem Kunststoff des Bereichs 10 verbunden.

Vorbereitung und Verfahrensablauf:

Nach dem Vorbehandeln der Pressmetallform 7, 8 an sämtlichen Kontaktflächen mittels Trennspray werden die Folien 3, 3' mit den vorfixierten Schmucksteinen 2 in die Form 7, 8 auf den Unterstempel 8 bzw. Oberstempel 7 eingelegt. Sämtliche Trägerelemente wie Folien 3, 3' und Platten 6, 6', die in den Verbundkörper 4 integriert werden, sollen sich zwecks Gesamterscheinungsbild durch hohe Transparenz und optische Güte auszeichnen.

Die auf die Formfläche zugeschnittenen Folien 3, 3' und Platten 6, 6' sowie der Bereich 10 aus faserverstärktem Kunststoff werden im gewünschten symmetrischen Sandwich-Schichtaufbau sorgfältig in die Form 7, 8 eingelegt, welche durch Anbringen des Oberstempels 7 geschlossen wird. Die geschlossene Form 7, 8 wird in die Heißpresse 9 gegeben und noch drucklos auf 90 - 110°C erwärmt. Bei Erreichen dieses Vorwärmtemperaturbereichs wird erstmals minimaler spezifischer Pressdruck p von 0,05 kN/cm² angelegt, damit die Schmucksteine 2 in die bereits ein wenig plastisch gewordenen Deckplatten 6, 6' noch mehr eindringen können und somit für den weiteren Prozess fixiert sind.

Danach erfolgt weiteres Aufheizen der Form 7, 8 auf die Pulverlack-spezifische Einbrenntemperatur (z.B. 160°C) bei noch immer anliegendem Pressdruck p von 0,05 kN/cm² für die Dauer von 5 - 10 Minuten. In Folge wird die Form auf ca. 130°C abgekühlt und dann einem konstantem Pressdruck p von ca. 0,4 kN/cm² unterzogen. Die Werkzeugtemperatur wird bei dieser Druckeinstellung weiterhin gesenkt bis ca. 70°C erreicht sind. Anschließend kann der Verbundkörper 4 ausgeformt werden.

Als weiterführende Variante kann der Aufbau der zu verpressenden Schichten auch mit Zwischenlagen aus bedrucktem Papier oder Dekorfolien erfolgen.

Die schematische Darstellung gemäß Figur 10 betrifft eine Herstellung einer weiteren Ausführungsform eines erfindungsgemäßen Verbundkörpers 4. In diesem Fall besteht der Trägerkörper 1 aus einem Bereich 10 mit faserverstärktem Kunststoff in Form einer Verbundplatte oder einer oder mehreren Prepreg-Schichten. Dieser Bereich 10 wird beim Verpressen mit zwei Deckplatten 6 aus PMMA verbunden. An die Außenseiten der Deckplatten 6 wird jeweils eine Folie 3 mit daran fixierten Schmucksteinen 2 verpresst. An die Außenseiten der Folien 3 wird jeweils eine weitere Deckplatte 6' aus PMMA verpresst. An die Außenseite der weiteren Deckplatten 6' wird jeweils eine weitere Folie 3' mit daran fixierten Schmucksteinen 2 verpresst. Bei den am Unterstempel 8 angeordneten Folien 3, 3' sind die Schmucksteine 2 der Übersicht halber nicht dargestellt. In der Heißpresse 9 werden all diese Schichten miteinander verpresst, wobei sich infolge des Pressdrucks p und der Erwärmung eine stoffschlüssige Verbindung zwischen diesen Bauteilen ausbildet. Die Deckplatten 6, 6' und die Folien 3, 3' sind transparent ausgebildet damit die Schmucksteine 2 zur Geltung kommen.

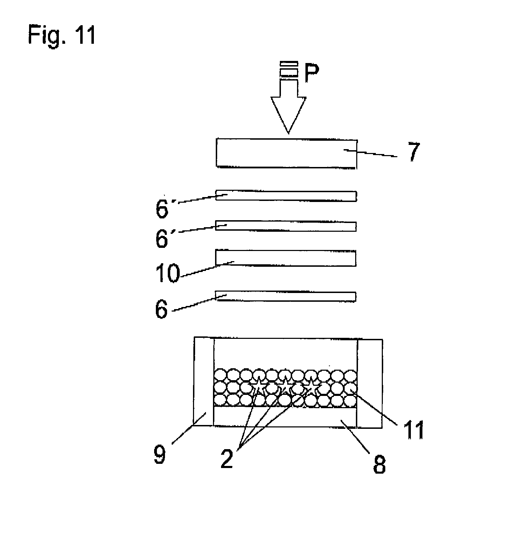

Figur 11 zeigt schematisch ein Herstellungsverfahren für eine weitere Ausführungsform eines erfindungsgemäßen Verbundkörpers 4, wobei dekorative Elemente 2, beispielsweise facettiert geschliffene Schmucksteine 2 mittels eines Heißpressverfahrens mit einem Trägerkörper 1 aus Kunststoff verbunden werden, der zumindest bereichsweise aus faserverstärktem Kunststoff besteht.

Dabei werden die dekorativen Elemente 2 mit einem vorzugsweise aus PMMA bestehenden transparenten Kunststoffgranulat 11 in eine Form eingelegt, die Ihrerseits auf den Unterstempel 8 des Presswerkzeugs angeordnet wird. Ein Bereich 10 aus faserverstärktem Kunststoff, beispielsweise eine Verbundplatte oder eine oder mehrere Prepreg-Schichten, wird während des Pressvorgangs auf beiden Seiten mit jeweils einer Deckplatte 6, 6' aus PMMA verbunden. Alternativ können statt der Deckplatten 6, 6' auch starke Folien verwendet werden. Auf der dem Kunststoffgranulat 11 gegenüberliegenden Seite des Bereichs 10 können auch mehrere Platten 6' verwendet werden, um einen Symmetrieausgleich zum Bereich mit den dekorativen Elementen 2 zu ermöglichen.

Das Granulat 11 ist z.B. etwa 3 mm lang und hat einen Durchmesser von ca. 4 mm und stammt aus der herkömmlichen Kunststoff-Spritzguss- und Extrusionsverarbeitung. Die Verarbeitungstemperatur liegt zwischen 220 - 260°C. Das Granulat 11 wird mit einer Heißpresse 9 verarbeitet. Es können dekorative Elemente 2 in einer entsprechenden Menge PMMA-Granulat 11 einerseits gemischt und bestmöglich schwimmend im Presswerkzeug verteilt werden (Fall 1). Alternativ ist eine Positionierung mit den zuvor beschriebenen Trägerfolien 3 und Fixierhilfen in einer Pressform am Stempel möglich, woraufhin das Presswerkzeug mit PMMA-Granulat 11 aufgefüllt wird (Fall 2). Für die Verarbeitung des PMMA-Granulats 11 wird eine Temperatur von 200-230°C in Verbindung mit einem spezifischen Pressdruck p von ca. 1 kN/cm² benötigt, um Korngrenzen des aufgeschmolzenen Granulats im Verbundkörper zu vermeiden.

Verfahrensablauf:

Nach dem Vorbehandeln der Pressmetallform 7, 8 an sämtlichen Kontaktflächen mittels Trennspray wird im Fall 1 eine Mischung aus PMMA-Granulat 11 und gegebenenfalls homogen verteilten dekorativen Elementen 2 in die offene Pressform 7, 8 gefüllt und der Oberstempel 7 zur Schließung der Form 7, 8 angebracht.

Im Fall 2 wird die mit den dekorativen Elementen 2 versehene Trägerfolie 3 bzw. die Elemente 2 dicht auf der Werkzeugformoberfläche angebracht und die offene Pressform 7, 8 mit PMMA-Granulat 11 befüllt, woraufhin der Oberstempel 7 zur Schließung der Form 7, 8 angebracht wird.

In beiden Fällen wird anschließend die geschlossene Form 7, 8 in der Presse 9 zunächst noch drucklos auf ca. 90 - 110°C aufgeheizt. Bei Erreichen dieser Vorwärmtemperatur wird ein Minimaldruck p von 0,05 kN/cm² eingestellt. Danach erfolgt weiteres Aufheizen der Form 7, 8 unter diesem Druck auf ca. 200 - 230°C. Bei Erreichen der Maximaltemperatur wird die Form 7, 8 bei 0,05 kN/cm² auf 130°C abgekühlt, ab dieser Abkühltemperatur wird mit einem Hauptdruck von 1 kN/cm² weiter gefahren bis zur Ausform-Temperatur von ca. 90 - 70°C. Die Druckbeaufschlagung wird abgeschaltet und der Verbundkörper 4 kann handwarm ausgeformt werden.

## Patentansprüche

1. Dekorativer Verbundkörper (4) enthaltend einen Trägerkörper (1) aus Kunststoff und wenigstens ein im Trägerkörper (1) befestigtes dekoratives Element (2), wobei der Trägerkörper (1) zumindest bereichsweise aus einem faserverstärktem Kunststoff besteht, **dadurch gekennzeichnet, dass** das dekorative Element (2) stoffschlüssig mit dem Trägerkörper verbunden ist.

2. Verbundkörper nach Anspruch 1, **dadurch gekennzeichnet, dass** das dekorative Element (2) im Bereich (10) des faserverstärkten Kunststoffs mit dem, vorzugsweise zur Gänze aus faserverstärktem Kunststoff bestehenden, Trägerkörper (1) verbunden ist.

3. Verbundkörper nach Anspruch 1 oder 2, **dadurch gekennzeichnet, dass** das dekorative Element (2) mit aufgeschmolzenem bzw. zumindest teilweise verflüssigtem und wieder erstarrtem Kunststoff des Trägerkörpers (1) stoffschlüssig verbunden ist.

4. Verbundkörper nach einem der Ansprüche 1 bis 3, **dadurch gekennzeichnet, dass** der Kunststoff, vorzugsweise der faserverstärkte Kunststoff, ausgewählt ist aus der Gruppe der Duroplasten, vorzugsweise in Form eines Pulverlacks, oder aus der Gruppe der Thermoplasten.

5. Verbundkörper nach einem der Ansprüche 1 bis 4, **dadurch gekennzeichnet, dass** die Fasern ausgewählt sind aus Carbonfasern, Glasfasern, Aramidfasern, Basaltfasern und/oder Naturfasern.

6. Verbundkörper nach einem der Ansprüche 1 bis 5, **dadurch gekennzeichnet, dass** die Seite des Trägerkörpers (1), an welcher das wenigstens eine dekorative Element (2) angeordnet ist, zusätzlich mit einer Folie (3), vorzugsweise aus PMMA, und/oder mit einer transparenten Deckplatte (6), vorzugsweise aus PMMA, versehen ist.

7. Verbundkörper nach einem der Ansprüche 1 bis 6, **dadurch gekennzeichnet, dass** das wenigstens eine dekorative Element (2) ein Schmuckstein (2), der als, vorzugsweise mit Facetten versehener, natürlicher oder synthetischer Edelstein oder als, vorzugsweise mit Facetten versehener, Glasstein, vorzugsweise aus Kristallglas, ausgebildet ist und/oder ein metallisches Dekorationsobjekt, ein Holzelement, eine Dekorfolie oder ein technisches Funktionselement ist.

8. Verfahren zur Herstellung eines dekorativen Verbundkörpers (4) nach einem der Ansprüche 1 bis 7, **gekennzeichnet durch** die folgenden Schritte:
i. Erhitzen des Trägerkörpers (1) auf eine erste Temperatur
ii. Verpressen des wenigstens einen dekorativen Elements (2) mit dem Trägerkörper (1)
iii. Ausbilden einer stoffschlüssigen Verbindung zwischen dem dekorativen Element (2) und Trägerkörper (1).

9. Verfahren nach Anspruch 8, wobei während des Verpressens der Trägerkörper (1) auf eine Temperatur oberhalb der ersten Temperatur erhitzt wird.

10. Verfahren nach Anspruch 8 oder 9, wobei die erste Temperatur 90-250° C, vorzugsweise 120-220° C und ganz vorzugsweise 130-180°C, beträgt und das Verpressen bei einem Druck (p) von 0,01 - 1 kN/cm², vorzugsweise 0,02 - 0,5 kN/cm² und ganz vorzugsweise 0,03 - 0,2 kN/cm², erfolgt.

11. Verfahren nach einem der Ansprüche 8 bis 10, wobei vor dem Verpressen des wenigstens einen dekorativen Elements (2) mit dem Trägerkörper (1) eine Kavität (5) für das dekorative Element (2) vorgeformt wird.

12. Verfahren nach einem der Ansprüche 8 bis 11, wobei das wenigstens eine dekorative Element (2) von einer Folie (3) während des Verpressens gehalten wird.

13. Verfahren nach einem der Ansprüche 8 bis 12, wobei das Abkühlen des Verbundkörpers (4) unter Aufrechterhaltung eines Pressdrucks (p) erfolgt.

14. Verfahren nach einem der Ansprüche 8 bis 13, wobei das wenigstens eine dekorative Element (2) gleichzeitig mit einer Deckplatte (6) mit dem Trägerkörper (1) verpresst wird.

15. Verfahren nach einem der Ansprüche 8 bis 14, **dadurch gekennzeichnet, dass** das wenigstens eine dekorative Element (2) in ein Kunststoffgranulat (11) eingelegt wird, wobei das in das Kunststoffgranulat (11) eingelegte dekorative Element (2) gemäß Schritt (ii) mit dem Trägerkörper (1) verpresst wird.
